# EUROPEAN PATENT SPECIFICATION

(11) **EP 1 563 569 B1**
(45) Date of publication and mention of the grant of the patent: **21.03.2007**
(21) Application number: 03754334.5
(22) Date of filing: 20.10.2003
(51) Int. Cl.: H01Q 1/32, G01S 7/40

(54) **ALIGNMENT RIG FOR RADAR ANTENNA ON VEHICLE**
AUSRICHTUNG FÜR EINE RADARANTENNE AUF EINEM FAHRZEUG
ENSEMBLE D'ALIGNEMENT D'ANTENNE RADAR SUR UN VEHICULE

(30) Priority: 04.11.2002 SE 0203236
(43) Date of publication of application: 17.08.2005
(73) Proprietor: Scania CV AB (publ), 151 87 Södertälje (SE)
(72) Inventor: MULLINS, Tobias, S-413 14 Göteborg (SE)
(86) International application number: PCT/SE2003/001619
(87) International publication number: WO 2004/042867

(56) References cited:
- EP-A- 0 905 526
- EP-A2- 0 984 297
- US-A- 5 313 213
- US-B1- 6 335 705
- US-B1- 6 363 619

## Description

### Technical field

The present invention relates to an alignment rig and a method for determining the emitting direction of a radar antenna relative to a vehicle's frame, the vehicle being that on which the radar antenna is mounted.

### Background

Vehicles, e.g. trucks, can be provided with an adaptive cruise control system which may be called either AICC (Autonomous Intelligent Cruise Control) or ACC (Adaptive Cruise Control). An adaptive cruise control system comprises not only a conventional cruise control system but also devices for adjusting the vehicle's speed and its distance from a vehicle travelling in front of it. The measurements required for this purpose are obtained by using a radar which can measure, by means of a radar antenna arranged on the front of the vehicle, the distance of the vehicle from a vehicle travelling in front and the difference in speed between the two vehicles. This measurement is done with great precision, which requires observance of strict tolerances when fitting and setting the radar antenna.

Heavy vehicles, e.g. trucks, often have a frame whose longitudinal direction does not coincide with the vehicle's direction of movement, i.e. the angle between the longitudinal direction of the frame and the axial direction of the driving shaft is not 90°, owing to manufacturing tolerances and assembly tolerances between the frame and the powered wheelshafts at the wheelshaft fastenings to the frame.

US 6 335 705 B 1 refers to a method for being able to set a radar antenna so that the direction of emission of the radar antenna coincides with great precision with the direction of movement of the vehicle. According to that method, a fixture with two receiving antennas is placed in front of the vehicle so that the driving shaft is parallel with the fixture. This is achieved by mounting a laser unit on the wheel of the driving shaft, thereby enabling the fixture to be placed parallel with the driving shaft by means of a laser beam emitted from the laser unit towards the fixture. Thereafter a signal is sent from the radar antenna to the two receiving antennas. The emitting direction of the radar antenna relative to the direction of movement of the vehicle is determined on the basis of the difference between the signals received by the two receiving antennas.

According to another method which has been used for being able to set a radar antenna so that the direction of emission of the radar antenna coincides with great precision with the vehicle's direction of movement, the vehicle is placed so that the driving shaft is in a predetermined position relative to a screen, preferably parallel with the screen. This predetermined position is established by first adjusting the wheel relative to an oblique rim so that the actual direction of rotation is derived therefrom, after which a laser unit is mounted on the wheel of the driving shaft. The position of the screen can then be established by emitting a laser beam. When the position of the screen has been established, a laser unit is mounted on the front of the vehicle in the direction of emission of the radar antenna. Thereafter a laser beam is sent from this laser unit on the front of the vehicle towards the screen. Reading the radar beam impact point on the screen and knowing the position of the driving shaft relative to the screen makes it possible to adjust the radar beam, and hence also the emission direction of the antenna, to a desired position, i.e. in line with the vehicle's direction of movement.

EP 0905526 discloses a device for adjusting the alignment of the radio axis of a vehicle mounted radar comprising means for measuring the position of the vehicle with respect to a reference direction. The device to this end comprises a rig on which the vehicle is mounted and a mirror positioned standing in front of the vehicle for reflecting a ray emitted by a separate emission source along a known direction with respect to the radio axis of the radar. The device further comprises measuring means upon which the reflected ray's angular deviation from its emission direction is measured.

One problem with devices and methods of the kind mentioned above for setting the direction of emission of a radar antenna is that it is a relatively time-consuming process. Another problem is that in the case of an external screen fixed in the surface on which the vehicle stands, e.g. a workshop floor, the vehicle has to be set after the screen. Moreover it is difficult to set an external screen when elsewhere than in a workshop, e.g. out in the field. A further problem is that setting involves catering for different frame heights.

### Brief description of the invention

The problem that setting the direction of emission of the radar antenna is a relatively time-consuming process, the problem that in the case of an external screen fixed relative to the surface on which the vehicle stands the vehicle has to be set after the screen, the problem that it is difficult to set an external screen elsewhere than in a workshop and the problem that setting involves catering for different frame heights are solved according to the invention by arranging an alignment rig and a method for setting the direction of emission of a radar antenna relative to a vehicle's frame (the vehicle being that on which the radar antenna is mounted) whereby the alignment rig comprises a display screen arranged perpendicular to the longitudinal direction of the vehicle frame and in such a way that the direction of emission of the radar antenna falls on the display screen and fastening means for fixing the alignment rig to the vehicle frame.

The fact that the alignment rig comprises the characteristics stated in claim 1 results in the advantage that setting the radar becomes simpler and quicker and that the accuracy of setting is improved due to reduction in the number of possible sources of error. In addition, the problem of lateral and height setting is minimised, since setting is done with the direction of movement as reference.

### Brief list of drawings

The invention is explained in more detail below on the basis of the attached drawings, in which:
Figure 1 depicts schematically a view from above of a vehicle frame and an alignment rig according to an embodiment of the invention,
Figure 2 depicts schematically an alignment rig according to Figure 1 as seen from above,
Figure 3 depicts schematically an alignment rig according to Figure 2 as seen from the right side,
Figure 4 depicts schematically an alignment rig according to Figure 2 as seen from in front, and
Figure 5 depicts schematically an alignment rig according to Figure 2 as seen from behind.

### Description of preferred embodiments

The same features are given the same reference signs in the various diagrams. For the sake of clarity and to avoid confusion, the alignment rig is described in terms of its orientation (i.e. front, rear) in the situation when it is mounted on the vehicle, i.e. the rear of the alignment rig is directed towards the front of the vehicle when the alignment rig is mounted on the vehicle.

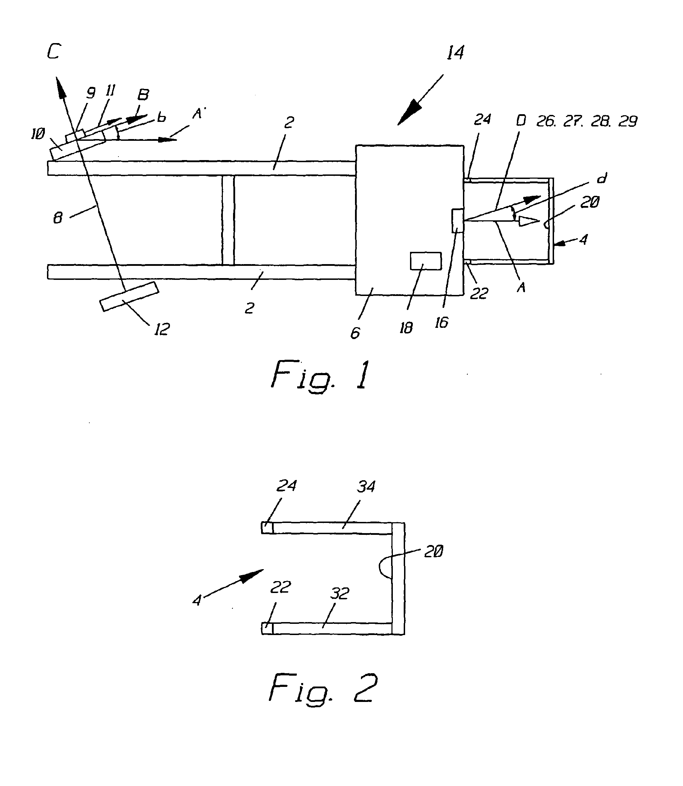

Figure 1 depicts schematically a view from above of a vehicle frame 2 which mainly comprises two longitudinal parallel side-members joined together by a number of transverse members, and an alignment rig 4 according to an embodiment of the invention. A driver's cab 6 and a driving shaft 8 with wheels 10,12 are arranged on the vehicle frame 2. A radar antenna 16 for an adaptive cruise control system 18, a so-called AICC system, is arranged on the front of the vehicle 14, e.g. on the driver's cab 6. The longitudinal direction of the vehicle frame 2 is denoted by A,A'.

A direction of movement B of the vehicle 14 is defined as the direction perpendicular to the direction of the driving shaft 8, i.e. in the direction of rotation of the powered wheels 10,12 adjusted for oblique rims. Heavy vehicles such as the vehicle 14, e.g. trucks, often have a frame 2 whose longitudinal direction A,A' does not coincide with the vehicle's direction of movement B, i.e. the angle between the longitudinal direction A,A' of the frame and the axial direction C of the driving shaft is not 90°, owing to manufacturing tolerances and assembly tolerances between the frame 2 and the driving wheelshaft 8 at the wheelshaft fastenings to the frame 2, resulting in an angle b between the frame's longitudinal direction A,A' and the vehicle's direction of movement B.

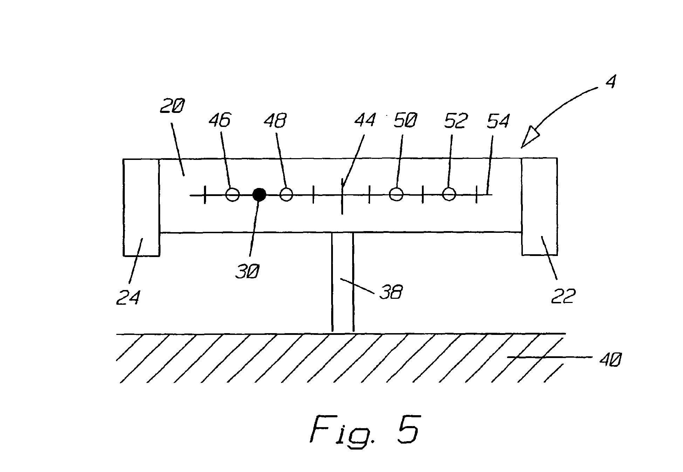

The present invention relates inter alia to a method for establishing the direction of emission D of a radar antenna 16 relative to the frame 2 of the vehicle 14, the vehicle 14 being that on which the radar antenna 16 is mounted. The method involves the following steps:
- establishing the position of the vehicle's driving shaft 8 relative to the vehicle's frame 2, e.g. by first adjusting a powered wheel 10 relative to a possibly oblique rim so that the actual direction of rotation is derived, followed by mounting a laser unit 9 on the wheel 10 of the driving shaft 8 and then emitting a laser beam 11 whereby an angle between the frame's longitudinal direction A,A' and the vehicle's direction of movement B can be measured as a lateral displacement between the frame's longitudinal direction A,A' and the vehicle's direction of movement B, expressed in mm/m.
- fixing a display screen 20 to the vehicle 14 in the direction of emission D of the radar antenna 16 by using fastening means 22,24 in such a way that the direction of emission D of the radar antenna 16 falls on the display screen 20, the display screen being preferably placed about 1 to 2 m from the radar antenna 16, although the distance may also be shorter than 1 m or longer than 2 m,
- sending a signal or beam, e.g. a radar signal 26 or a laser beam 28 or an ultrasonic signal 27 or an infrared beam 29, towards the display screen 20, which signal 26,27 or beam 28,29 is directed in substantially the same direction as the direction of emission D of the radar antenna 16,
- reading the point of impact 30 (see Figure 5) of the signal 26,27 or beam 28,29 on the display screen 20, preferably as a lateral displacement between the frame's longitudinal direction A,A' and the direction of emission D of the radar antenna 16, expressed in mm/m, and
- establishing the direction of emission D of the radar antenna 16 relative to the direction of movement B of the vehicle 14 on the basis of the position of the vehicle driving shaft 8 relative to the position of the vehicle frame 2 and on the basis of the impact point 30 of the signal 26,27 or beam 28,29 on the display screen 20.

This way of obtaining the direction of emission D of the radar antenna 16 relative to the direction of movement B of the vehicle 14 makes it possible for the direction of emission of the radar antenna 16 to be set with great precision and small tolerances in line with the direction of movement B of the vehicle 14 when fitting and setting the radar antenna 16. The direction of emission of the radar antenna 16 thus coincides with great precision with the direction of movement B of the vehicle 14, with the result that measurements of the distance from a vehicle travelling in front and the difference in speed between the two vehicles can be obtained with great precision when using an adaptive cruise control system.

It should be noted that, for the sake of clarity, the angle b between the direction of rotation B of the vehicle 14 and the direction A.A' of the frame 2 is exaggerated in the diagram. The angle is normally less than 0.115°, corresponding to a lateral displacement of less than 2mm/m.

The present invention also relates to an alignment rig 4 for establishing the direction of emission D of a radar antenna 16 relative to the frame 2 of the vehicle 14, the vehicle 14 being that on which the radar antenna 16 is mounted.

Figures 2 to 5, which are described in more detail below, depict an alignment rig 4 according to the present invention for establishing the direction of emission D of a radar antenna 16 relative to a frame 2 of a vehicle 14, the vehicle 14 being that on which the radar antenna 16 is mounted.

Figure 2 depicts schematically an alignment rig 4 according to Figure 1 as seen from above. The alignment rig 4 comprises a display screen 20 arranged perpendicular to the longitudinal direction A,A' of the vehicle frame 2 in such a way that the direction of emission D of the radar antenna 16 falls on the display screen 20, and fixing means 22,24 for fixing the alignment rig 4 to the vehicle frame 2. The display screen 20 will automatically be perpendicular to the longitudinal direction A,A' of the vehicle frame 2 because the alignment rig 4 is so designed that the display screen 20 is fixed perpendicular to the longitudinal direction of the vehicle frame 2 when the alignment rig 4 is hooked onto the vehicle frame 2. However, the fastening means 22,24 are preferably hinged so as to make it possible for the alignment rig to be adjusted in the height direction. The alignment rig 4 further comprises first and second supporting arms 32;34 which respectively connect the first and second fastening means 22;24 to the display screen 20.

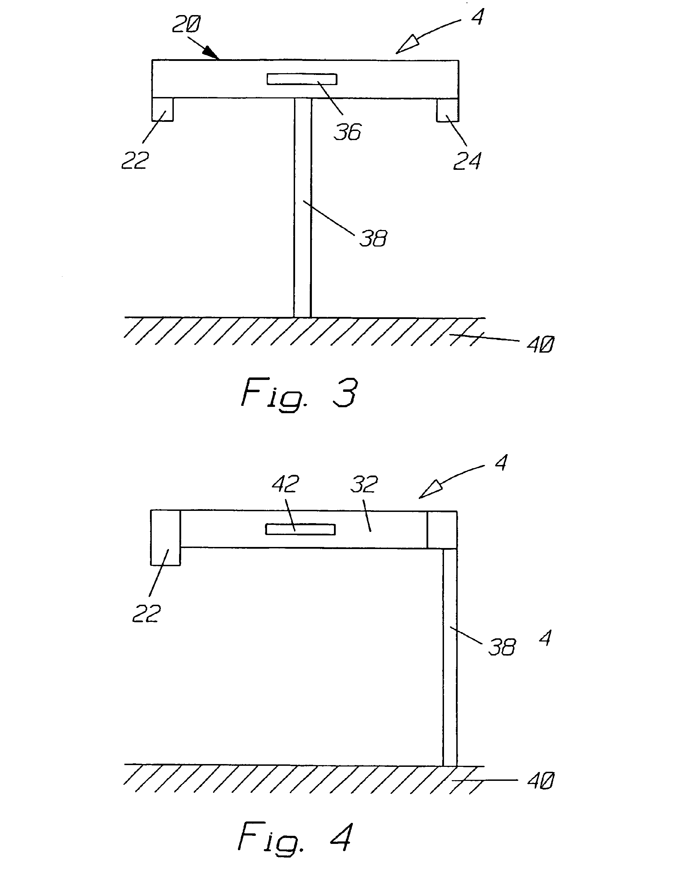

Figure 3 depicts schematically an alignment rig 4 according to Figure 2 as seen from in front. As may be seen in the diagram, the alignment rig 4 preferably further comprises a first indicating means 36, preferably in the form of a water level and preferably arranged adjacent to the display screen 20, for indicating the position of the alignment rig 4 relative to the horizontal and the vertical. The alignment rig 4 preferably further comprises at least one supporting leg 38 which supports the display screen 20 relative to the surface 40 on which the vehicle stands. The supporting leg may be raisable and lowerable, i.e. be telescopic. The supporting leg may also be hinged.

Figure 4 depicts schematically an alignment rig 4 according to Figure 2 as seen from the right side. As may be seen in the diagram, the alignment rig 4 preferably further comprises a first indicating means 42, preferably in the form of a water level at an angle to the second indicating means 36 and preferably arranged on one of the supporting arms 32;34, for indicating the position of the alignment rig 4 relative to the horizontal and the vertical.

Figure 5 depicts schematically an alignment rig 4 according to Figure 2 as seen from behind. The alignment rig 4 comprises a display screen 20 in which ref. 44 denotes the direction of emission D of the radar antenna 16 when the direction of rotation D of the radar antenna 16 coincides with the longitudinal direction A, A' of the vehicle frame 2. The display screen 20 may incorporate sensors 46,48,50,52 for detection of signals 26,27, e.g. from the radar antenna 16. Alternatively, the display screen 20 may incorporate a scale 54 intended to facilitate reading of an impact point 30 of the beam 28,29 on the display screen 20.

Establishing the position of the vehicle driving shaft 8 relative to the position of the vehicle frame 2 may also be achieved, for example, by arranging a permanent fixture in which the vehicle's driving shaft 8 is placed and fixed at the time of assembly in order to ensure a more perpendicular fitting of the vehicle driving shaft 8 relative to the vehicle frame 2, so that they cannot move relative to one another during assembly, thereby resulting in smaller error tolerances.

Camera technology may also be used for reading the impact point 30 (see Figure 5) of the signal 26,27 or beam 28,29 on the display screen 20.

## Claims

1. An alignment rig for setting the direction of emission (D) of a radar antenna (16) relative to a frame (2) of a vehicle (14), which frame comprises two longitudinal parallel side-members joined together by transverse members, wherein a drivers cab (6) and a rear driving shaft (8) provided with powered wheels (10, 12) are arranged on said frame (2), and wherein the radar antenna (16) is arranged on the front of the vehicle (14), **characterised in that** the alignment rig (4) comprises a display screen (20) and a first and a second supporting arm (32;34) which respectively connect a first and a second fastening means (22;24) to the display screen (20), the alignment rig (4) being arranged for hooking to the vehicle frame (2), wherein the display screen (20) is arranged perpendicular to the longitudinal direction (A,A') of the vehicle frame (2) and in such a way that the direction of emission (D) of the radar antenna (16) falls on the display screen (20), which screen comprises sensors (46,48,50,52) for detection of signals (26,27) from the radar antenna (16).

2. An alignment rig according to claim 1, **characterised in that** the alignment rig (4) further comprises indicating means (36,42) for indicating the position of the alignment rig (4) relative to the horizontal and the vertical.

3. An alignment rig according to claim 2, **characterised in that** the a indicating means (36) is arranged in the form of a water level (36) adjacent to the display screen (20).

4. An alignment rig according to claim 3, **characterised in that** a second indicating means (42) is arranged in the form of a water level (42) placed at an angle to the first indicating means (36) on one of the supporting arms (32,34).

5. An alignment rig according to any one of claims 2 to 4, **characterised in that** the alignment rig (4) further comprises at least one supporting leg (38) which supports the display screen (20) relative to a surface on which the vehicle stands (40).

6. An alignment rig according to any one of claims 1 to 5, **characterised in that** the display screen (20) comprises a scale (54) intended to facilitate reading of an impact point (30) of the beam (28,29) on the display screen (20).

7. A method for establishing the direction of emission (D) of a radar antenna (16) relative to a frame (2) of a vehicle (14), the vehicle (14) being that on which the radar antenna (16) is mounted, comprising establishing the position of a vehicle driving shaft (8) relative to the position of the vehicle frame (2), **characterized in** further comprising the following steps:
- hooking an alignment rig (4) with a display screen (20) to the vehicle (14) frame (2) in the direction of emission (D) of the radar antenna (16) in such a way that the radar signal falls on the display screen (20), said alignement rig further comprising a first and a second supporting arm (32; 34) which respectively correct a first and second fastening means (22; 24) to the display screen (20).
- sending a signal (26,27) or a beam (28,29) towards the display screen (20), which signal (26,27) or beam (28,29) is directed in substantially the same direction as the direction of emission (D) of the radar antenna (16),
- reading an impact point (30) of the signal (26,27) or beam (28,29) on the display screen (20), and
- establishing the direction of emission (D) of the radar antenna (16) relative to the direction of movement (B) of the vehicle (14) on the basis of the angle (b) between the axial direction of the vehicle driving shaft (8) and the longitudinal direction of the vehicle frame (2) and on the basis of the impact point (30) of the signal (26,27) or beam (28,29) on the display screen (20).

8. A method according to claim 7, comprising the step of:
- setting the direction of emission of the radar antenna (16) in line with the direction of movement (B) of the vehicle (14) on the basis of the established direction of emission (D) of the radar antenna (16) relative to the direction of movement (B) of the vehicle (14).

## Patentansprüche

1. Ausrichtvorrichtung für eine Abstimmung der Emissionsrichtung (D) einer Radarantenne (16) relativ zu einem Rahmen (2) eines Kraftfahrzeugs (14), wobei der Rahmen zwei längslaufende parallele Seitenelemente aufweist, die durch querlaufende Elemente miteinander verbunden sind, wobei eine Fahrerkabine (6) und eine hintere Antriebswelle (8), welche angetriebene Räder (10, 12) aufweist, an dem Rahmen (2) angebracht sind, und wobei die Radarantenne (16) an der Vorderseite des Kraftfahrzeugs (14) angebracht ist, **dadurch gekennzeichnet, dass** die Ausrichtvorrichtung (4) eine Anzeigebildfläche (20) und einen ersten und einen zweiten Stützarm (32; 34) aufweist, welche jeweils ein erstes und ein zweites Befestigungsmittel (22; 24) an der Anzeigebildfläche (20) befestigt, wobei die Ausrichtvorrichtung (4) angebracht ist, um an dem Kraftfahrzeug-Rahmen (2) gehalten zu werden, wobei die Anzeigebildfläche (20) senkrecht zu der Längsrichtung (A, A') des Kraftfahrzeug-Rahmens (2) angebracht ist und zwar derart, dass die Emissionsrichtung (D) der Radarantenne (16) auf die Anzeigebildfläche (20) fällt, wobei die Bildfläche Sensoren (46, 48, 50, 52) zur Erfassung von Signalen (26, 27) von der Radarantenne (16) aufweist.

2. Ausrichtvorrichtung nach Anspruch 1, **dadurch gekennzeichnet, dass** die Ausrichtvorrichtung (4) darüber hinaus Anzeigemittel (36, 42) aufweist, um die Position der Ausrichtvorrichtung (4) relativ zur Horizontalen und zur Vertikalen anzuzeigen.

3. Ausrichtvorrichtung nach Anspruch 2, **dadurch gekennzeichnet, dass** ein Anzeigemittel (36) in Form einer Wasserwaage (36) gegenüber der Anzeigebildfläche (20) angeordnet ist.

4. Ausrichtvorrichtung nach Anspruch 3, **dadurch gekennzeichnet, dass** ein zweites Anzeigemittel (42) in Form einer Wasserwaage (42) angeordnet ist, welche schräg zu dem ersten Anzeigemittel (36) an einem der Stützarme (32, 34) platziert ist.

5. Ausrichtvorrichtung nach einem der Ansprüche 2 bis 4, **dadurch gekennzeichnet, dass** die Ausrichtvorrichtung (4) darüber hinaus wenigstens ein Stützbein (38) aufweist, welches die Anzeigebildfläche (20) relativ zu einer Oberfläche stützt, auf der das Kraftfahrzeug steht (40).

6. Ausrichtvorrichtung nach einem der Ansprüche 1 bis 5, **dadurch gekennzeichnet, dass** die Anzeigebildfläche (20) einen Maßstab (54) aufweist, welcher vorgesehen ist, um ein Ablesen eines Auftreffpunktes (30) des Strahls (28, 29) auf der Anzeigebildfläche (20) zu erleichtern.

7. Verfahren zum Ermitteln der Emissionsrichtung (D) einer Radarantenne (16) relativ zu einem Rahmen (2) eines Kraftfahrzeugs (14), wobei das Kraftfahrzeug (14) dasjenige ist, auf dem die Radarantenne (16) angebracht ist, welches ein Ermitteln der Position einer Kraftfahrzeug-Antriebswelle (8) relativ zu der Position des Kraftfahrzeug-Rahmens (2) aufweist, **dadurch gekennzeichnet, dass** es darüber hinaus die folgenden Schritte aufweist:
- Einhängen einer Ausrichtvorrichtung (4) mit einer Anzeigebildfläche (20) an dem Kraftfahrzeug (14) - Rahmen (2) in der Emissionsrichtung (D) der Radarantenne (16) derart, dass das Radarsignal auf die Anzeigebildfläche (20) fällt, wobei die Ausrichtvorrichtung darüber hinaus einen ersten und zweiten Stützarm (32; 34) aufweist, welche jeweils ein erstes und ein zweites Befestigungsmittel (22; 24) an der Anzeigebildfläche (20) befestigt,
- Senden eines Signals (26, 27) oder eines Strahls (28, 29) zu der Anzeigebildfläche (20), wobei das Signal (26, 27) oder der Strahl (28, 29) im Wesentlichen in dieselbe Richtung wie die Emissionsrichtung (D) der Radarantenne (16) gerichtet ist,
- Ablesen eines Auftreffpunktes (30) des Signals (26, 27) oder des Strahls (28, 29) auf der Anzeigebildfläche (20), und
- Ermitteln der Emissionsrichtung (D) der Radarantenne (16) relativ zu der Bewegungsrichtung (B) des Kraftfahrzeuges (14) auf Basis des Winkels (b) zwischen der Axialrichtung der Kraftfahrzeug-Antriebswelle (8) und der Längsrichtung des Kraftfahrzeug-Rahmens (2) und auf Basis des Auftreffpunkts (30) des Signals (26, 27) oder Strahls (28, 29) auf der Anzeigebildfläche (20).

8. Verfahren nach Anspruch 7, welches den Schritt aufweist:
- Abstimmen der Emissionsrichtung der Radarantenne (16) in einer Linie mit der Bewegungsrichtung (B) des Kraftfahrzeuges (14) auf Basis der ermittelten Emissionsrichtung (D) der Radarantenne (16) relativ zu der Bewegungsrichtung (B) des Kraftfahrzeugs (14).

## Revendications

1. Ensemble d'alignement permettant d'établir la direction d'émission (D) d'une antenne radar (16) par rapport au châssis (2) d'un véhicule (14), lequel châssis comprend deux éléments latéraux longitudinaux parallèles reliés ensemble par des traverses, dans lequel une cabine de conduite (6) et un arbre d'entraînement arrière (8) muni de roues motrices (10, 12) sont agencés sur le châssis (2) et dans lequel l'antenne radar (16) est agencée à l'avant du véhicule (14), **caractérisé en ce que** l'ensemble d'alignement (4) comprend un écran d'affichage (20) et un premier et un second bras de support (32, 34) qui relient respectivement un premier et un second moyens d'attachement (22, 24) à l'écran d'affichage (20), l'ensemble d'alignement (4) étant agencé de manière à accrocher le châssis du véhicule (2), dans lequel l'écran d'affichage (20) est agencé perpendiculairement à la direction longitudinale (A, A') du châssis du véhicule (2) et de manière à ce que la direction d'émission (D) de l'antenne radar (16) tombe sur l'écran d'affichage (20), lequel écran comprend des détecteurs (46, 48, 50, 52) permettant de détecter des signaux (26, 27) provenant de l'antenne radar (16).

2. Ensemble d'alignement selon la revendication 1, **caractérisé en ce que** l'ensemble d'alignement (4) comprend en outre un moyen d'indication (36, 42) permettant d'indiquer la position de l'ensemble d'alignement (4) par rapport à l'horizontale et à la verticale.

3. Ensemble d'alignement selon la revendication 2, **caractérisé en ce que** le moyen d'indication (36) est agencé sous la forme d'un niveau d'eau (36) adjacent à l'écran d'affichage (20).

4. Ensemble d'alignement selon la revendication 3, **caractérisé en ce qu'**un second moyen d'indication (42) est agencé sous la forme d'un niveau d'eau (42) placé de manière à former un angle par rapport au premier moyen d'indication (36) sur un des bras de support (32, 34).

5. Ensemble d'alignement selon l'une quelconque des revendications 2 à 4, **caractérisé en ce que** l'ensemble d'alignement (4) comprend en outre au moins un jambage de support (38) qui supporte l'écran d'affichage (20) par rapport à une surface sur laquelle le véhicule repose (40).

6. Ensemble d'alignement selon l'une quelconque des revendications 1 à 5, **caractérisé en ce que** l'écran d'affichage (20) comprend une échelle (54) destinée à faciliter la lecture d'un point d'impact (30) du faisceau (28, 29) sur l'écran d'affichage (20).

7. Procédé permettant d'établir la direction d'émission (D) d'une antenne radar (16) par rapport au châssis (2) d'un véhicule (14), le véhicule (14) étant celui sur lequel l'antenne radar (16) est montée, comprenant l'étape consistant à établir la position d'un arbre d'entraînement du véhicule (8) par rapport à la position du châssis du véhicule (2), **caractérisé en ce qu'**il comprend en outre les étapes suivantes :
- accrocher un ensemble d'alignement (4) avec un écran d'affichage (20) au châssis (2) du véhicule (14) dans la direction d'émission (D) de l'antenne radar (16) de manière à ce que le signal radar tombe sur l'écran d'affichage (20), ledit ensemble d'alignement comprenant en outre un premier et un second bras de support (32, 34) qui relient respectivement un premier et un second moyens d'attachement (22, 24) à l'écran d'affichage (20),
- envoyer un signal (26, 27) ou un faisceau (28, 29) vers l'écran d'affichage (20), lequel signal (26, 27) ou faisceau (28, 29) est dirigé sensiblement dans la même direction que la direction d'émission (D) de l'antenne radar (16),
- lire un point d'impact (30) du signal (26, 27) ou du faisceau (28, 29) sur l'écran d'affichage (20), et
- établir la direction d'émission (D) de l'antenne radar (16) par rapport à la direction de mouvement (B) du véhicule (14) en fonction de l'angle (b) formé entre la direction axiale de l'arbre d'entraînement du véhicule (8) et la direction longitudinale du châssis de véhicule (2) et en fonction du point d'impact (30) du signal (26, 27) ou du faisceau (28, 29) sur l'écran d'affichage (20).

8. Procédé selon la revendication 7, comprenant l'étape consistant à :
- établir la direction d'émission de l'antenne radar (16) conformément à la direction de mouvement (B) du véhicule (14) en fonction de la direction d'émission (D) établie de l'antenne radar (16) par rapport à la direction de mouvement (B) du véhicule (14).
